Europäisches Patentamt

European Patent Office

Office européen des brevets

(19)

(11) Veröffentlichungsnummer: **0 109 035
B1**

(12) # EUROPÄISCHE PATENTSCHRIFT

(45) Veröffentlichungstag der Patentschrift:
17.09.86

(21) Anmeldenummer: 83111146.3

(22) Anmeldetag: 08.11.83

(51) Int. Cl.⁴: **F 16 D 65/847, F 16 D 65/12**

(54) Belüftete Bremsscheibe für Scheibenbremsen, insbesondere für Kraftfahrzeuge.

(30) Priorität: 10.11.82 DE 3241549

(43) Veröffentlichungstag der Anmeldung:
23.05.84 Patentblatt 84/21

(45) Bekanntmachung des Hinweises auf die Patenterteilung:
17.09.86 Patentblatt 86/38

(84) Benannte Vertragsstaaten:
DE FR GB IT

(56) Entgegenhaltungen:
EP - A - 0 082 786
DE - A - 2 260 155
DE - A - 2 505 205
DE - A - 2 937 207
DE - A - 2 942 151
FR - A - 1 579 316
FR - A - 1 580 381
US - A - 1 453 599

(73) Patentinhaber: **VOLKSWAGEN
AKTIENGESELLSCHAFT, D-3180 Wolfsburg (DE)**

(72) Erfinder: **Jaeger, Ulrich, Prof. Dipl.-Ing., Am Kleinen
Schafkamp 21, D-3300 Braunschweig (DE)**
Erfinder: **Knipfelberg, Manfred, Prof. Dipl.-Ing., Am
Roten Amte 40, D-3340 Wolfenbüttel (DE)**

ACTORUM AG

**Beschreibung**

Die Erfindung bezieht sich auf eine belüftete Bremsscheibe für Scheibenbremsen, insbesondere für Kraftfahrzeuge, der im Oberbegriff des Patentanspruchs 1 genannten Art sowie auf Verfahren zu deren Herstellung. Eine belüftete Bremsscheibe der im Oberbegriff des Anspruchs 1 bzw. Anspruchs 2 genannten Art ist Gegenstand der älteren EP-A-0082786, die am 29.6.1983 veröffentlicht wurde.

Es hat in der Vergangenheit nicht an Versuchen gefehlt, die aus Guss, vorzugsweise aus Grauguss, gefertigte Bremsscheibe konventioneller Scheibenbremsen durch Blechkonstruktionen oder durch Mischformen, bei denen z.B. ein Nabenteil als Ziehteil aus Stahlblech und der Bremsring in üblicher Weise als Gussring gefertigt ist, zu ersetzen. Zumindest als Scheibenbremse für Kraftfahrzeuge haben sich derlei Konstruktionen bisher nicht durchsetzen können, weil der fertigungstechnische Aufwand zum Teil zu gross oder zu kompliziert war oder aber weil die Funktionsweise nicht befriedigte.

Aus zwei oder mehr vorgeformten Stahlblech-Einzelteilen zusammengesetzte belüftete Vollblech-Bremsscheiben sind in den unterschiedlichsten Ausführungen bekannt.

Eine bekannte belüftete Bremsscheibe aus Stahlblech (US-PS-3773153) besteht aus zwei im axialen Abstand zueinander angeordneten ringförmigen Stahlblechscheiben, die als Reibringe dienen und unter Zwischenschaltung von Abstandhaltern miteinander vernietet sind, aus einem topfförmigen Nabenteil aus Stahlblech, welches mit einer der beiden Stahlblechscheiben vernietet ist, sowie aus mindestens einem zwischen den beiden Stahlblechscheiben angeordneten ringförmigen Kühlblechteil, welches aus einem sehr dünnen, mäanderförmig gefalteten und mit Kühlschlitzen versehenen Blech, vorzugsweise Kupfer- oder Aluminiumblech, hergestellt ist; durch das gefaltete Zwischenteil werden eine Vielzahl schmaler und radial verlaufender Belüftungskanäle geschaffen, die für eine intensive Kühlung der beiden Stahlblechscheiben sorgen sollen. Der konstruktive Aufbau dieser bekannten Bremsscheibe ist sehr kompliziert und erfordert einen sehr hohen fertigungstechnischen Aufwand zumindest für den Einsatz in Grossserienfahrzeugen ist diese Art von Bremsscheiben nicht geeignet.

Eine andere bekannte belüftete Bremsscheibe aus Stahlblech (US-PS-3730304) besteht im wesentlichen aus zwei ringförmigen Blechscheiben, einem topfförmigen Nabenteil und einer Vielzahl aus Blechstreifen gefertigter Distanzteile, welche durch Schweissen miteinander verbunden sind. Auch bei dieser bekannten Bremsscheibe ist der fertigungstechnische Aufwand sehr gross.

Eine andere bekannte aus vorgeformten Stahlblech-Einzelteilen zusammengesetzte belüftete Bremsscheibe für Scheibenbremsen von Kraftfahrzeugen (DE-OS-1810155) besteht aus zwei als Reibringe dienenden Scheibenringteilen sowie einem Tragteil, das einen inneren topfförmigen Nabenteil zur Befestigung am Fahrzeugrad und einen sich davon radial nach aussen erstreckenden integrierten ringförmigen Flanschteil mit über den Umfang verteilten und in axialer Richtung weisenden wellenförmigen Ausformungen enthält. Die beiden Scheibenringteile sind dabei durch Schweissen oder ein ähnliches Fügeverfahren fest mit den wellenförmigen Ausformungen des Flanschteiles verbunden, wobei durch die wellenförmigen Ausformungen jeweils radial verlaufende Lüftungskanäle zwischen den beiden Scheibenringteilen entstehen.

Auch bei dieser bekannten Scheibenbremse ist der fertigungstechnische Aufwand recht gross. Wegen des radialen Verlaufs der gebildeten Kühlkanäle ergibt sich ausserdem – wie auch bei den zuvor beschriebenen bekannten Bremsscheiben – innerhalb der Kühlkanäle eine vergleichsweise geringe Kühlluft-Relativgeschwindigkeit, das einen entsprechend geringen Wärmetransport zur Folge hat. Im Hinblick darauf, dass das Wärmespeichervermögen von aus Stahlblech gefertigten Bremsscheiben im Vergleich zu Guss-Bremsscheiben geringer ist, kommt es bei der Konstruktion einer Blech-Bremsscheibe jedoch entscheidend darauf an, durch geeigete Massnahmen die Wärmeabfuhr durch Konvektion möglichst gross zu machen.

Eine weitere bekannte innenbelüftete Bremsscheibe aus Stahlblech (US-PS-1453599) ist aus nur zwei vorgeformten ringförmigen Stahlblech-Einzelteilen zusammengesetzt. Diese sind identisch ausgebildet und besitzen über den Umfang gleichmässig verteilte und gleichmässig in einen radial inneren und einen radial äusseren Teilkreis aufgeteilte, einwärts gerichtete buckelförmige Ausdrückungen, die jeweils an ebenen Bereichen des anderen Einzelteils anliegen und dort, z.B. durch elektrisches Punktschweissen, mit diesem verschweisst sind. Der radial innere Ringumfang mindestens eines der beiden Einzelteile weist eine Verzahnung auf, so dass die Bremsscheibe formschlüssig mit einem keilverzahnten Wellenteil o.ä. verbunden werden kann. Diese bekannte Bremsscheibe scheint in erster Linie als Kupplungsscheibe o.ä. in Getriebeanordnungen o.ä., nicht jedoch als Bremsscheibe für Kraftfahrzeug-Scheibenbremsen gedacht zu sein. Die auf den Aussenflächen vorhandenen Eindrückungen (Negative der buckelförmigen Ausdrückungen) dienen nämlich als Schmiermittelkammern und ausserdem sind über den Scheibenumfang verteilte Axialbohrungen vorgesehen, damit Schmiermittel auch vom Scheibeninneren zu den Scheibenaussenflächen fliessen kann.

Der gegenseitige Abstand der beiden Stahlblech-Einzelteile ist bei dieser Bremsscheibe durch die Höhe der Ausdrückungen bestimmt. Bei Bremsscheiben für Kraftfahrzeug-Scheibenbremsen müssen die ringförmigen Einzelteile zur Erzielung einer ausreichenden Innenbelüftung einen relativ grossen Abstand voneinander haben, was entsprechend hohe Ausdrückungen bzw. entsprechend tiefe Eindrückungen erfordert. Grosse Eindrücktiefen können fertigungstechnisch jedoch problematisch sein, zumal dann, wenn stärkere Stahlbleche Verwendung finden. Grössere Eindrücktiefen bedingen generell auch grössere Einrückdurchmesser, wodurch − mit quadratischer Abhängigkeit − entsprechend grössere Flächen als Reibflächen verloren gehen. Ausserdem beeinträchtigen grössere Eindrückdurchmesser u.U. den Abrieb von mit der Bremsscheibe zusammenwirkenden Bremsbelägen.

Ausgehend von einer belüfteten Bremsscheibe der im Oberbegriff des Patentanspruchs 1 genannten Art liegt der Erfindung nun die Aufgabe zugrunde, andererseits diese für einen Einsatz in Kraftfahrzeug-Scheibenbremsen so zu verbessern, dass auch dann, wenn beide ringförmigen Einzelteile in relativ grossem Abstand zueinander angeordnet sein müssen, Eindrückdurchmesser der buckelförmigen Ausdrückungen vergleichsweise gering gehalten werden können und verbesserte Betriebseigenschaften, insbesondere bessere Abkühleigenschaften erzielt werden, und andererseits ein Verfahren zur Herstellung dieser Bremsscheiben anzugeben.

Diese Aufgabe wird erfindungsgemäss durch die kennzeichnenden Merkmale der Patentansprüche 1 und 2 gelöst.

Die Bremsscheibe wird also derart aus zwei vorgeformten Stahlblech-Einzelteilen zusammengesetzt, dass die buckelförmigen Ausdrückungen beider Einzelteile aufeinander liegen und dabei derart über den Scheibenumfang verteilt sind, dass im zusammengesetzten Zustand eine Bremsscheibe mit von innen nach aussen verlaufenden Strömungskanälen mit schaufelförmig gebogenen, unterbrochenen Seitenwandungen entsteht.

Durch die spezielle Art und Anordnung der Eindrückungen wird einerseits eine vergleichsweise grosse wirksame Reibfläche mit relativ flachen und durchmesserkleinen Eindrückungen erzeugt und andererseits wird nicht nur eine besonders grosse wirksame Belüftungsoberfläche geschaffen, was für den Wärmeübergang von der Scheibe zur durchströmenden Luft von Vorteil ist, sondern es wird gleichzeitig eine besonders wirkungsvolle Schaufelfunktion erzeugt, bei der es durch die unterbrochenen Seitenwandungen der Strömungskanäle zur Ausbildung von sogenannten Kreuzströmungen kommt, was eine starke Verwirbelung und Beschleunigung der durchströmenden Kühlluft bewirkt. Durch geeignete räumliche Anordnung der buckelförmigen Ausdrückungen können dabei in einfacher Weise die Eintritts- und Austrittswinkel der Strömungskanäle so festgelegt werden, dass sich für die Wärmeübertragung optimale Luftströmungsgeschwindigkeiten ergeben.

Eine vorteilhafte und erfindungswesentliche Ausgestaltung und Weiterbildung der Erfindung ist in dem Unteranspruch angegeben.

Anhand eines in der Zeichnung dargestellten Ausführungsbeispieles wird die Erfindung nachstehend im einzelnen erläutert.

In der Zeichnung zeigen:
Fig. 1 die Draufsicht einer belüfteten Bremsscheibe für Scheibenbremsen gemäss der Erfindung;
Fig. 2 die Seitenansicht dieser Bremsscheibe in zum Teil geschnittener Darstellung, und
Fig. 3 ein in Fig. 2 näher bezeichnetes Detail dieser Bremsscheibe.

Dargestellt und/oder beziffert sind in der Zeichnung lediglich die für das Verständnis der Erfindung notwendigen Einzelheiten.

Die belüftete Bremsscheibe ist aus zwei vorgeformten Stahlblech-Einzelteilen 1, 2 zusammengesetzt. Eines davon ist als Tragteil 1 ausgebildet und besteht aus einem radial inneren topfförmigen Nabenteil 11 zur üblichen Befestigung an einem Fahrzeug sowie aus einem sich davon radial nach aussen erstreckenden Scheibenringteil 12, dessen äussere Fläche als Reibfläche dient.

Das andere Stahlblech-Einzelteil ist als Scheibenringteil 2 ausgebildet, wobei der Aussendurchmesser dieses Scheibenringteiles dem Aussendurchmesser des Scheibenringteils 12 des Tragteils 1 entspricht. Über den Umfang beider Scheibenringteile 2, 12 sind in axialer Richtung weisende buckelförmige Ausdrückungen verteilt, die im Scheibenringteil 12 mit 13 und im Scheibenringteil 2 mit 21 beziffert sind. Sie übernehmen gleichzeitig mehrere Aufgaben. Sie dienen zum einen im Bereich der mit den nicht weiter dargestellten Bremsbelägen der Scheibenbremse zusammenwirkenden Scheibenringteile als Abstandshalter für die beiden zusammengefügten Stahlblech-Einzelteile 1 und 2 und zum anderen werden sie als Verbindungspunkte verwendet; vorzugsweise werden die beiden Stahlblech-Einzelteile an diesen buckelförmigen Ausdrückungen miteinander verschweisst. Grundsätzlich ist allerdings auch denkbar, die Verbindung an diesen Stellen durch Kleben oder ein ähnliches Fügeverfahren herzustellen.

Darüber hinaus übernehmen die buckelförmigen Ausdrückungen 13 und 21 noch Führungsaufgaben für die die beiden Scheibenringteile 2, 12 durchströmende Kühlluft. Sie sind nämlich in einer speziellen Geometrie entlang dem Ringumfang verteilt angeordnet und zwar derart, dass durch sie von innen nach aussen verlaufende Strömungskanäle mit unterbrochenen, schaufelförmig gebogenen Seitenwandungen gebildet werden.

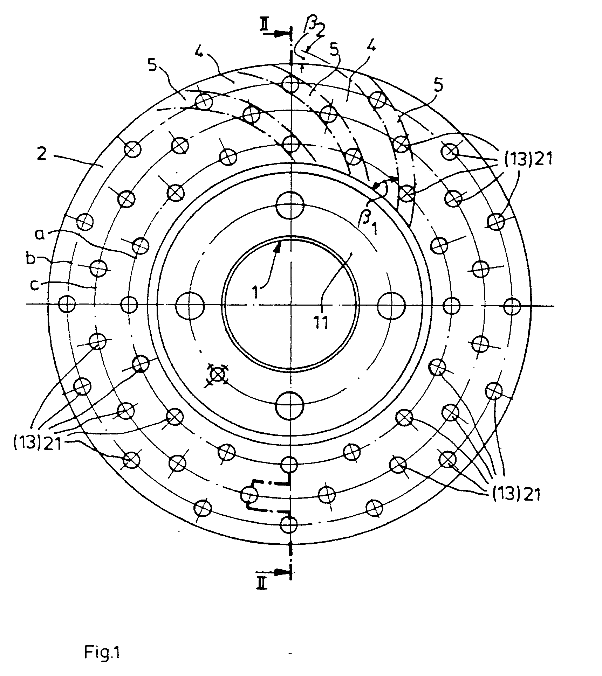

In Fig. 1 sind im oberen Teil des Scheibenumfanges zwei der so gebildeten Strömungskanäle angedeutet und mit 4 beziffert. In Umfangsrichtung werden diese Strömungskanäle durch strichpunktiert angedeutete Seitenwandungen 5 begrenzt, welche im Ausführungsbeispiel jeweils durch drei zusammenwirkende Paare buckelförmiger Ausdrückungen 13, 21 gebildet werden und schaufelförmig verlaufen. Der Eintrittwinkel ist dabei mit $\beta_1$ und der Austrittswinkel mit $\beta_2$ beziffert.

Bei Betrachtung der Fig. 1 ist leicht erkennbar, dass durch die spezielle räumliche Anordnung der buckelförmigen Ausdrückungen 13, 21 während des Betriebes die gewünschte Schaufelfunktion erzeugt wird und dass darüber hinaus infolge der seitlichen Durchbrechungen der – fiktiven – Seitenwandungen 5 sogenannte Kreuzströmungen ermöglicht werden, durch welche einerseits eine starke Verwirbelung und andererseits eine besondere Beschleunigung der Kühlluft zwischen den beiden Scheibenringteilen 2, 12 erzeugt wird. Auch die Grösse der Eintritts- sowie Austrittswinkel $\beta_1$, und $\beta_2$ übt einen Einfluss auf die Strömungsgeschwindigkeit der Kühlluft aus. Eine entsprechende Bremsung dieser Winkel trägt zur Optimierung der Wärmeabfuhr bei.

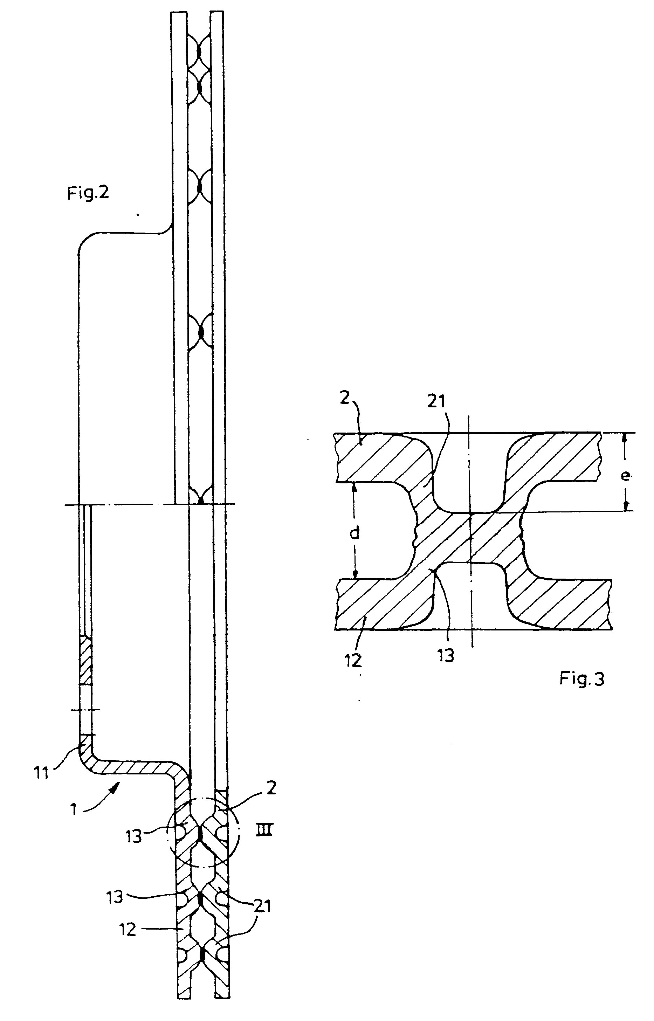

Grundsätzlich können im Bedarfsfall natürlich auch mehr als nur drei Buckelpaare Verwendung finden. Dabei muss allerdings berücksichtigt werden, dass einerseits eine ausreichend grosse Reibfläche für das Zusammenwirken mit den Bremsbelägen der Scheibenbremse erhalten bleibt und andererseits der Verschleiss der Bremsbeläge nicht durch eine zu grosse Zahl von buckelförmigen Ausdrückungen 13 bzw. 21 unzulässig hoch wird. Wie Fig. 2 erkennen lässt, machen sich diese nämlich auf den als Reibflächen wirkenden Aussenseiten der Scheibenringteile 2, 12 als Eindrückungen bemerkbar.

Die buckelförmigen Ausdrückungen 13, 21 sind räumlich derart angeordnet, dass bei zusammengesetzter Bremsscheibe jeweils Ausdrückungen beider Stahlblech-Einzelteile 1 bzw. 2 aufeinanderliegen und dort dann miteinander verschweisst oder in ähnlicher Weise fest miteinander verbunden werden. Dies ist in Fig. 3 im Detail dargestellt. Da bei einer derartigen Anordnung jeweils zwei Ausdrückungen aufeinander zu liegen kommen, muss zur Erzielung der gewünschten Kanalhöhe d die Eindrücktiefe e der Ausdrückungen 13, 21 jeweils nur noch vergleichsweise gering sein. Auch der Durchmesser der Eindrückungen bleibt klein. Das ist von wesentlichem Vorteil, weil dadurch einerseits die verbleibende wirksame Ringfläche relativ gross bleibt und andererseits der durch die Eindrückungen an sich hervorgerufene Mehrantrieb der Bremsbeläge in Grenzen gehalten wird. Auch wird die Gefahr, dass es wegen der Eindrückungen beim Bremsen zu komfortmindernden Vibrationen/Geräuschen kommt, verringert.

Im Ausführungsbeispiel sind die Ausdrückungen 13, 21 jeweils in gleich grosser Zahl auf einem radial inneren Teilkreis a, einem radial äusseren Teilkreis b und einem radial mittleren Teilkreis c angeordnet.

Bei der Herstellung der Bremsscheibe werden die in einem Press- oder Fliesspressverfahren vorgeformten Stahlblech-Einzelteile 1 und 2 in einer Fügevorrichtung fixiert und gegeneinander zentriert und in einer Buckelschweissmaschine, z.B. einer Portal-Buckelschweissmaschine, so zusammengeführt, dass sie mit ihren axial vorstehenden buckelförmigen Ausdrückungen aufeinanderliegen. Die so zusammengeführten Stahlblech-Einzelteile werden – innerhalb der Buckelschweissmaschine – sodann kalt vorgespannt, d.h. mit einer definierten Kraft aufeinandergepresst, und anschliessend mit der erforderlichen Schweissstromstärke und Periodenzahl an allen Ausdrükkungen 13, 21 gleichzeitig miteinander verschweisst. Die Fügevorrichtung der Buckelschweissmaschine ist zu diesem Zweck mit massiven Ring- oder Plattenelektroden, z.B. aus Kupfer oder Messing, ausgestattet, welche grossflächig, vorzugsweise vollflächig aus den Stahlblech-Einzelteilen anliegen. Diese Elektroden können natürlich auch selbst gleichzeitig als Fügevorrichtung ausgebildet sein.

Da die buckelförmigen Ausdrückungen kreissymmetrisch angeordnet sind und kalt vorgespannt sind, verteilt sich der über die Ring- oder Scheibenelektroden zugeführte Schweissstrom mit ausreichender Genauigkeit gleichmässig auf sämtliche Buckelpaarungen, so dass sich entlang dem Scheibenumfang eine gleichmäsige Schweissverbindung ergibt.

Nach Beendigung des Schweissens (Beendigung der Schweissstrom-Zufuhr) werden die schon verfestigten, jedoch noch warmen Fügestellen noch kurzzeitig gezielt warmgehalten, was durch Zufuhr eines Nachstromes geschieht, dessen Stromstärke niedriger ist als die des Schweissstromes. Im warmen Zustand werden die zusammengeschweissten Stahlblech-Einzelteile – noch in der gleichen Einspannung – durch Massstauchen kalibriert, d.h. die beiden Scheibenringoberflächen werden planparallel ausgerichtet und zueinander in einen definierten Abstand gebracht.

Insbesondere bei Verwendung von Stahlblechen mit definierter Rauhtiefe (dressierte Stahlbleche) wird eine anschliessende mechanische Bearbeitung der als Reibflächen dienenden äusseren Scheibenringteil-Oberflächen überflüssig.

Dadurch, dass einerseits sämtliche buckelförmigen Ausformungen in einem Arbeitsgang gleichzeitig miteinander verschweisst werden, wodurch ein Verziehen oder Verwerfen der beiden Einzelteile praktisch ausgeschlossen ist, und dass andererseits die geschweisste Bremsscheibe unmittelbar nach dem Schweissvorgang im noch warmen Zustand auf Mass gestaucht wird, wird der zeitliche, der fertigungstechnische und Energieaufwand zur Herstellung der erfindungsgemässen belüfteten Bremsscheibe gering gehalten.

Bei der Fertigung einer aus mehreren Stahlblech-Einzelteilen zusammengesetzten Bremsscheibe eine so grosse Zahl von buckelförmigen Ausformungen gleichzeitig miteinander zu verschweisssen, ist bisher wohl unbekannt. Bisher wurden die einzelnen Verbindungsstellen nacheinander punktgeschweisst.

Die vorgeschlagene belüftete Bremsscheibe ist im Vergleich zu konventionellen Guss-Bremsscheiben leicht. Da der Reibwert einer Stahlblech-Bremsscheibe anders, in der Regel etwas niedriger ist als der einer üblichen Guss-Bremsscheibe, versteht es sich, dass die Bremsbeläge entsprechend angepasst werden müssen. Eine solche besondere Anpassung ist auch erforderlich, weil beim Bremsen unter Umständen höhere maximale Scheibentemperaturen auftreten können als bei konventionellen Guss-Bremsscheiben, weil das Wärmespeichervermögen der Stahlblech-Bremsscheibe niedriger ist. Dies ist jedoch kein grundsätzlicher Nachteil, weil die Stahlblech-Bremsscheibe andererseits während der Fahrt im Gegensatz zu Guss-Bremsscheiben sehr schnell wieder abkühlt.

**Patentansprüche**

1. Belüftete Bremsscheibe, die zwei im Abstand zueinander parallel liegende, vorgeformte Stahlblech-Einzelteile (1, 2) mit je einem als Reibring dienenden Scheibenringteil (2, 12) mit über den Umfang verteilten und in axialer Richtung weisenden kreisring- bzw. punktförmigen, buckelförmigen Ausdrückungen (13, 21) enthält, wobei die aufeinanderliegenden Ausdrückungen (13, 21) beider Scheibenringteile (2, 12) durch Schweissen oder ein ähnliches Fügeverfahren miteinander verbunden sind, wobei zwischen ihnen kanalartige Strömungswege gebildet werden, dadurch gekennzeichnet, dass eines der zusammengefügten Stahlblech-Einzelteile (nämlich 1) als Tragteil mit einem radial äusseren Scheibenringteil (12) sowie einem sich davon radial nach innen erstreckenden einteilig angeformten topfförmigen Nabenteil (1) zur Befestigung an einem Fahrzeugrad ausgebildet ist, und dass die buckelförmigen Ausdrückungen (13, 21) über den Scheibenumfang derart verteilt angeordnet sind, dass durch sie von innen nach aussen verlaufende Strömungskanäle (4) mit unterbrochenen, schaufelförmig gebogenen Seitenwandungen (5) gebildet sind.

2. Verfahren zur Herstellung einer belüfteten Bremsscheibe, die zwei im Abstand zueinander parallel liegende vorgeformte Stahlblech-Einzelteile (1, 2) mit je einem als Reibring dienenden Scheibenringteil (2, 12) mit über den Umfang verteilten und in axialer Richtung weisenden kreisring- bzw. punktförmigen, buckelförmigen Ausdrückungen (13, 21) enthält, welche miteinander verschweisst sind, gekennzeichnet durch folgende Merkmale:

a) Die Ausdrückungen (13, 21) beider Scheibenringteile (2, 12) werden über den Scheibenumfang derart verteilt angeordnet, dass durch sie von innen nach aussen verlaufende Strömungskanäle (4) mit unterbrochenen, schaufelförmig gebogenen Seitenwandungen (5) gebildet werden.

b) Die mit Ausdrückungen (13 bzw. 21) versehenen vorgeformten Stahlblech-Einzelteile (1 bzw. 2) werden in einer Fügevorrichtung fixiert und auf einer Buckelschweissmaschine Ausdrückung (13) auf Ausdrückung (21) zusammengeführt.

c) Die zusammengeführten Stahlblech-Einzelteile (1, 2) werden kalt mit einer definierten Kraft aufeinandergepresst (vorgespannt) und anschliessend an sämtlichen Ausdrückungen (13, 21) gleichzeitig miteinander verschweisst.

d) Durch Zufuhr eines bezüglich seiner Stromstärke unterhalb des Schweissstroms liegenden Nachstroms werden die Fügestellen kurzzeitig warm gehalten.

e) Die Stahlblech-Einzelteile (1, 2) werden im warmen Zustand der Fügestellen durch Massstauchen in Planparallelität der Scheibenringoberflächen und in der Höhe kalibriert.

3. Verfahren nach Anspruch 2, gekennzeichnet durch die Verwendung von Stahlblechen mit definierter Rauhtiefe (dressierte Stahlbleche).

**Claims**

1. A ventilated brake disc which includes two preformed individual parts (1, 2) of sheet steel which are spaced apart and located parallel to one another and each of which has an annular portion (2, 12) which serves as a friction ring and is provided with circular or punctiform pressed-out bulge-shaped portions (13, 21) distributed around the periphery thereof and directed in an axial direction, the mutually abutting pressed-out portions (13, 21) of the two annular portions (2, 12) of the discs being interconnected by welding or a smiliar joining process, wherein passage-like flow paths are formed therebetween, characterised in that one of the joined individual parts (namely 1) of sheet steel is constructed as a support part with a radially outer annular portion (12) and an integrally formed cup-shaped hub portion (11) extending radially inwardly therefrom for the purpose of securing the support part to a vehicle wheel, and that the bulge-like pressed-out portions (13, 21) are distributed around the periphery of the disc in such a way that they form outwardly extending flow passages (4) with interrupted side walls (5) which are curved in a vane-like manner.

2. A method of manufacturing a ventilated brake disc which includes two preformed individual parts (1, 2) of steel which are spaced apart and located parallel to one another and each of which has an annular portion (2, 12) which serves as a friction ring and is provided with circular or punctiform pressed-out bulge-shaped portions (13, 21) which are distributed around the periphery thereof and directed in an axial direction and are welded to each other, characterised by the following features:

a) The pressed-out portions (13, 21) of the two annular portions (2, 12) of the discs are distributed around the periphery of the discs in such a way that they form outwardly extending flow passages (4) with interrupted side walls (5) which are curved in a vane-like manner;

b) The individual preformed sheet steel parts (1 or 2) provided with the pressed-out portions (13 or 21) are fixed in a joining device and are brought together on a projection welder with the pressed-out portions (13) in abutment against the pressed-out portion (21);

c) The individual sheet steel parts (1, 2) which have been brought together are pressed against one another (prestressed) in a cold state with a defined force and are subsequently and simultaneously welded to each other at all the pressed-out portions (13, 21);

d) The joints are kept hot for a short time by feeding an after-current whose intensity is below that of the welding current;

e) With the joints in their hot state, the individual sheet steel parts (1, 2) are calibrated in plane parallelism of the surfaces of the annular portions of the discs, and in height, by dimensional upsetting.

3. A method as claimed in claim 2, characterised by the use of steel sheets having a defined peak-tovalley height (dressed steel sheets).

## Revendications

1. Disque de freinage ventilé, comprenant deux pièces individuelles (1, 2) en tôle d'acier préformées parallèles à distance l'une de l'autre et comportant, respectivement, une partie discoïdo-annulaire (2, 12) servant de bague de frottement et munie d'empreintes repoussées (13, 21) du type bossages, respectivement annulaires ou en forme de points, réparties sur le pourtour et dirigées dans le sens axial, les empreintes repoussées (13, 21) successives des deux parties discoïdo-annulaire (2, 12) étant reliées les unes aux autres par soudage ou par un procédé d'assemblage analogue en formant, entre elles, des trajets d'écoulement du type canaux, caractérisé par le fait que l'une (c'est-à-dire 1) des parties individuelles en tôle d'acier assemblées est réalisée en tant que partie de support comprenant, d'un seul tenant, une partie discoïdo-annulaire (12) radialement externe et une partie formant moyeu (11), de configuration en cuvette s'étendant radialement vers l'intérieur depuis la partie précitée, en vue de la fixation à une roue de véhicule automobile; et par le fait que les empreintes repoussées (13, 21) du type bossages sont réparties, sur le pourtour du disque, de telle sorte qu'il soit formé, par ces empreintes, ces canaux d'écoulement (4) s'étendant de l'intérieur vers l'extérieur et dont les parois latérales (5) sont interrompues et cintrées en forme de pales.

2. Procédé de fabrication d'un disque de freinage ventilé comprenant deux pièces individuelles (1, 2) en tôle d'acier préformées, parallèles à distance l'une de l'autre et comportant, respectivement, une partie discoïdo-annulaire (2, 12) servant de bague de frottement et munie d'empreintes repoussées (13, 21) du type bossages, respectivement annulaires ou en forme de points, réparties sur le pourtour, dirigées dans le sens axial et solidarisées par soudage, caractérisé par les points suivants:

a) Les empreintes repoussées (13, 21) des deux parties disoïdo-annulaires (2, 12) sont réparties, sur le pourtour du disque, de telle sorte qu'il soit formé, par ces empreintes, des canaux d'écoulement (4) s'étendant de l'intérieur vers l'extérieur et dont les parois latérales (5) en forme de pales.

b) Les parties individuelles (1, 2, respectivement) en tôle d'acier préformées, munies d'empreintes repoussées (13, 21, respectivement), sont bloquées à demeure dans un dispositif d'assemblage et sont guidées conjointement, sur une machine de soudage par bossages, empreinte repoussée (13) sur empreinte repoussée (21).

c) Les parties individuelles (1, 2) en tôle d'acier guidées conjointement sont pressées à froid l'une sur l'autre (précontraintes) avec une force déterminée, puis sont simultanément solidarisées par soudage sur toutes les empreintes repoussées (13, 21).

d) Les zones d'assemblage sont maintenues chaudes pour une courte durée, par délivrance d'un courant de post-chauffage dont l'intensité est inférieure à celle du courant de soudage.

e) A l'état chaud des zones d'assemblage, les parties individuelles (1, 2) en tôle d'acier sont, par refoulement aux cotes souhaitées, calibrées en hauteur et en parallélisme des plans des surfaces annulaires du disque.

3. Procédé selon la revendication 2, caractérisé par l'utilisation de tôles d'acier à profondeur totale de rugosité bien définie (tôles d'acier dressées).

Fig.1

Fig.2

Fig.3